# EUROPEAN PATENT APPLICATION

(11) **EP 4 806 937 A1**
(43) Date of publication of application: **16.09.2026**
(21) Application number: 26163239.2
(22) Date of filing: 09.03.2026
(51) Int. Cl.: C08G 63/16, C08J 5/18, C08L 3/02, C08L 67/02

(54) **ALIPHATIC POLYESTER, POLYESTER COMPOSITION CONTAINING SAME, AND USE THEREOF**

(30) Priority: 10.03.2025 CN 202510276917
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN); Liaoning Kingfa Biomaterial Co., Ltd., Panjin City, Liaoning Province 124000 (CN)
(72) Inventor: Lu, Changli, Guangzhou, 510663 (CN); Chen, Pingxu, Guangzhou, 510663 (CN); Ye, Nanbiao, Guangzhou, 510663 (CN); Zeng, Xiangbin, Guangzhou, 510663 (CN); Fu, Xuejun, Guangzhou, 510663 (CN); Zhang, Yi, Guangzhou, 510663 (CN); Ouyang, Chunping, Guangzhou, 510663 (CN); Zhang, Erjie, Guangzhou, 510663 (CN); Ye, Jiaqi, Guangzhou, 510663 (CN); Yao, Yi, Guangzhou, 510663 (CN)
(74) Representative: Petraz, Gilberto Luigi

(57) **Abstract**

The present invention provides an aliphatic polyester, a polyester composition containing the same, and use thereof. The aliphatic polyester includes a dicarboxylic acid residue and a diol residue; the dicarboxylic acid residue includes the following residues: a1) based on a total molar percentage content of a1) and a2) as 100 mol%, 61.2-69 mol% of a succinic acid residue; and a2) based on the total molar percentage content of a1) and a2) as 100 mol%, 31-38.8 mol% of a sebacic acid residue; and the diol residue is selected from a 1,4-butanediol residue with a molar content at least equal to that of the dicarboxylic acid residue. In the present invention, the aliphatic polyester has good uniformity in terms of transverse and longitudinal tear resistance, high tensile strength, and a short biological disintegration period under home composting conditions, thereby meeting home composting requirements.

## Description

### TECHNICAL FIELD

The present invention belongs to the technical field of degradable polyester materials, and particularly relates to an aliphatic polyester, a polyester composition containing the same, and use thereof.

### BACKGROUND

Resource and environmental issues are major problems for human beings to achieve sustainable development. Environmental pollution is one of manifestations of the resource and environmental issues. For example, white pollution caused by general-purpose plastics, especially packaging film materials, such as shopping bags, garbage bags, and agricultural mulching films, severely affects a land utilization rate, results in air and water pollution, and is prone to causing fire, thereby affecting life and health. The white pollution refers to the phenomenon of environmental pollution caused by plastics, which are randomly discarded after use and are difficult to degrade; and therefore, the development of biodegradable materials with good performance is one of important and indispensable means to address the white pollution.

In the biodegradable materials, in order to reduce costs and improve the flexibility of films, polymers from natural sources, such as starch, are usually filled. However, commercially available starch-based biodegradable materials have the problem of poor uniformity in mechanical properties, especially transverse and longitudinal tear resistance, and such biodegradable materials are prone to undergoing transverse tear and thus cannot withstand a certain limit of weight. In addition, most commercially available starch-based biodegradable materials adopt aliphatic-aromatic polyesters as base resins, such as poly(butylene adipate-co-terephthalate) (PBAT) and poly(butylene sebacate-co-terephthalate) (PBSeT). Due to a relatively high content of terephthalate chain segments in their molecular structures, the aliphatic-aromatic polyesters are usually difficult to meet home composting requirements when a product thickness is relatively high (> 50 µm).

To address the problem of uniformity of mechanical properties of the starch-based biodegradable materials, especially the problem of anisotropy of longitudinal and transverse tear resistance, CN101522797A discloses a biodegradable composition. By adopting starch with an average particle size of less than 0.25 µm as a dispersed phase, the problem of anisotropy of materials is effectively ameliorated. However, the starch with a smaller particle size has a higher cost, and is more difficult to disperse in a high filling system; and further, the composition adopts PBAT as a base resin, which cannot effectively solve the problem of home composting of materials.

Based on this, the development of an aliphatic polyester that has good uniformity in longitudinal and transverse tear resistance, has a high disintegration rate, can be used for preparing the starch-based biodegradable materials, and can meet home composting requirements, is a problem to be solved urgently in the field.

### SUMMARY

In view of the shortcomings of the prior art, an objective of the present invention is to provide an aliphatic polyester, a polyester composition containing the same, and use thereof. The aliphatic polyester can be used for preparing starch-based biodegradable materials, solves the problems of anisotropy and poor uniformity in longitudinal and transverse tear resistance of the starch-based biodegradable materials, and can meet home composting requirements.

To achieve the objective, the present invention adopts the following technical solutions.

In a first aspect, the present invention provides an aliphatic polyester, where the aliphatic polyester includes a dicarboxylic acid residue and a diol residue; the dicarboxylic acid residue includes the following residues: a1) based on a total molar percentage content of a1) and a2) as 100 mol%, 61.2-69 mol% of a succinic acid residue; and a2) based on the total molar percentage content of a1) and a2) as 100 mol%, 31-38.8 mol% of a sebacic acid residue; and the diol residue is selected from a 1,4-butanediol residue with a molar content at least equal to that of the dicarboxylic acid residue. In the present invention, by controlling the contents of the succinic acid residue and the sebacic acid residue within the above ranges, poly(butylene succinate-co-sebacate) with uniform transverse and longitudinal tear resistance can be obtained; by using the poly(butylene succinate-co-sebacate) as a base resin for preparing starch-based biodegradable materials, the problems of anisotropy and poor uniformity in longitudinal and transverse tear resistance of the starch-based biodegradable materials are solved, and meanwhile, it can also be ensured that the materials have good tensile properties and degradability; and home composting requirements can be met.

It should be noted that the "residue" refers to any organic structure of a relevant monomer introduced into a polymer molecular chain via a polycondensation reaction, that is, the organic structure derived from the corresponding monomer; and for example, the dicarboxylic acid residue refers to a structure derived from a dicarboxylic acid monomer in the aliphatic polyester.

In the present invention, succinic acid and/or a succinic acid derivative is introduced into a polyester molecular chain via a polymerization reaction to form the succinic acid residue; sebacic acid and/or a sebacic acid derivative is introduced into the polyester molecular chain via a polymerization reaction to form the sebacic acid residue; in a chain segment structure of the aliphatic polyester, a high content of the succinic acid residue results in a high crystallization speed, high crystallinity, and poor uniformity in longitudinal and transverse tear resistance of the aliphatic polyester; and a high content of the sebacic acid residue results in smooth chain segments and also deteriorated uniformity in longitudinal and transverse tear resistance of the aliphatic polyester. Controlling a molar ratio of the succinic acid residue to the sebacic acid residue within a specific range enables the aliphatic polyester to have excellent uniformity in longitudinal and transverse tear resistance, and meanwhile, ensures that the material has good tensile properties and degradability without affecting processing performance of the material.

In the present invention, the succinic acid derivative includes an alkyl succinate; exemplarily, the alkyl succinate may be at least one of dimethyl succinate, diethyl succinate, di-n-propyl succinate, diisopropyl succinate, di-n-butyl succinate, diisobutyl succinate, di-tert-butyl succinate, di-n-pentyl succinate, diisopentyl succinate, and di-n-hexyl succinate; and the alkyl succinate may be an alkyl ester formed from succinic acid or an alkyl ester formed from succinic anhydride, and dimethyl succinate formed from succinic anhydride is preferably used.

In the present invention, the sebacic acid derivative includes an alkyl sebacate; exemplarily, the alkyl sebacate may be at least one of dimethyl sebacate, diethyl sebacate, di-n-propyl sebacate, diisopropyl sebacate, di-n-butyl sebacate, diisobutyl sebacate, di-tert-butyl sebacate, di-n-pentyl sebacate, diisopentyl sebacate, and din-hexyl sebacate; and the alkyl sebacate may be an alkyl ester formed from sebacic acid or an alkyl ester formed from sebacic anhydride.

Preferably, the dicarboxylic acid residue includes the following residues: a1), based on the total molar percentage content of a1) and a2) as 100 mol%, 63.5-67.5 mol% of the succinic acid residue; and a2), based on the total molar percentage content of a1) and a2) as 100 mol%, 32.5-36.5 mol% of the sebacic acid residue.

Preferably, a number-average molecular weight (Mn) of the aliphatic polyester is 30,000-150,000, preferably 45,000-120,000, and more preferably 58,000-79,000.

In the present invention, the number-average molecular weight may be determined by gel permeation chromatography (GPC), with monodisperse polystyrene as a standard substance. When the number-average molecular weight is slightly high or slightly low, poor uniformity in longitudinal and transverse tear resistance of the aliphatic polyester will be caused.

In the present invention, the number-average molecular weight may be regulated by regulating a polymerization temperature and time, and adding a cross-linking agent and a chain transfer agent, etc.

Preferably, according to GB/T 32366-2015, a carboxyl content of the aliphatic polyester is < 35 mol/t, preferably < 28 mol/t, and more preferably 5-20 mol/t.

In the present invention, a high carboxyl content of the aliphatic polyester results in poor hydrolysis resistance and aging resistance; a low carboxyl content results in a low biological disintegration rate and a high cost; fewer carboxyl ends from an unreacted dicarboxylic acid component result in a lower carboxyl content of the aliphatic polyester; therefore, the carboxyl content may be controlled by changing conditions such as an alcohol-to-acid ratio, a polymerization temperature, and a polymerization time to regulate a reaction degree or by suppressing thermal decomposition; and in addition, the carboxyl content may also be controlled by inhibiting the types or quantities of impurities in raw materials, such as nitrogen compounds and metal ions.

Preferably, according to GB/T 17931-1999, an intrinsic viscosity of the aliphatic polyester is 1.38-2.32 dL/g, preferably 1.5-2.2 dL/g, further preferably 1.58-2.11 dL/g, more preferably 1.67-2.02 dL/g, and particularly preferably 1.82-1.95 dL/g.

In the present invention, when the intrinsic viscosity of the aliphatic polyester is within the above range, the aliphatic polyester can have good uniformity in longitudinal and transverse tear resistance, and mechanical and physical properties of a molded product during molding and processing can be ensured; and in addition, it can also ensure that the melt viscosity of the polyester during molding and processing does not cause excessive load on molding machines, such as an extruder and an injection machine, thereby ensuring productivity.

In the present invention, a method for preparing the aliphatic polyester is not particularly limited, and any method capable of preparing the aliphatic polyester with a specific structure in the present invention may be used; and preferably, the method for preparing the aliphatic polyester includes the following steps:
(1) allowing a dicarboxylic acid and a diol to carry out a reaction to obtain an esterification product;
(2) allowing the esterification product obtained in the step (1) to carry out a pre-polymerization reaction to obtain a pre-polymerization product; and
(3) allowing the pre-polymerization product obtained in the step (2) to carry out a polycondensation reaction to obtain a polycondensation product, namely, the aliphatic polyester of the present invention.

In the present invention, in the step (1), the dicarboxylic acid is succinic acid and/or a succinic acid derivative, as well as sebacic acid and/or a sebacic acid derivative; the dicarboxylic acid may be used alone, and may also be a mixture of at least two kinds; and the diol is 1,4-butanediol.

In the present invention, a molar ratio of the diol to the dicarboxylic acid is (1.2-3):1, for example, may be 1.2:1, 1.5:1, 1.8:1, 2:1, 2.2:1, 2.5:1, 2.8:1, 3:1, or a range between any of the above numerical values, and is more preferably (1.4-2):1.

In the present invention, the succinic acid and/or the succinic acid derivative is not particularly limited in source, which may be derived from bio-based succinic acid and/or a succinic acid derivative (that is, the raw material for preparation is a biomass resource), and may also be derived from petroleum-based succinic acid and/or a succinic acid derivative (that is, the raw material for preparation is derived from a petroleum resource).

In the present invention, in the step (1), a raw material for the reaction further includes a cross-linking agent; based on a total mass of the aliphatic polyester as 100 wt%, a mass of the cross-linking agent is 0-3 wt%; the cross-linking agent includes at least one of a polyol, a polyacid, or a polyacid anhydride; and exemplarily, the cross-linking agent includes, but is not limited to, tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, pyromellitic dianhydride, etc.

In the present invention, the reaction in the step (1) includes an esterification reaction and/or a transesterification reaction; the reaction is carried out at a temperature of 150-220°C and a pressure of 0.7-1.3 bar for a time of 2-6 h; and further preferably, the reaction is carried out at a temperature of 165-210°C and a pressure of 0.8-1.2 bar for a time of 3-5 h.

In the present invention, the step (1) may be carried out in a mixing device, where the dicarboxylic acid and the diol are mixed to obtain a slurry, and then heated to carry out the reaction.

In the present invention, a carboxyl content of the esterification product in the step (1) is 240-570 mol/t, more preferably 300-400 mol/t.

In the present invention, after the reaction in the step (1), the method further includes a step of removing an excessive amount of the diol by distillation, the removed diol may be purified by distillation to reuse as a raw material, and a purity of the purified diol is ≥ 95%.

In the present invention, the pre-polymerization reaction in the step (2) is carried out at a temperature of 230-260°C and a pressure of 0.3-0.8 bar for a time of 70-200 min; and further preferably, the reaction is carried out at a temperature of 240-250°C and a pressure of 0.5-0.7 bar for a time of 90-130 min.

In the present invention, the step (2) may be carried out in a pre-polymerization reactor.

In the present invention, a carboxyl content of the pre-polymerization product in the step (2) is 40-90 mol/t, more preferably 55-75 mol/t.

In the present invention, the polycondensation reaction in the step (3) is carried out at a temperature of 235-260°C and a pressure of 0.2-5 mbar for a time of 40-110 min; and further preferably, the reaction is carried out at a temperature of 240-250°C and a pressure of 0.5-2 mbar for a time of 70-100 min.

In the present invention, the step (3) may be carried out in a finishing device suitable for the polycondensation reaction, such as a rotary reactor, a cage reactor, and a horizontal reactor.

In the present invention, the reaction in the step (2) is carried out in the presence of a catalyst; the catalyst may be a tin compound, an antimony compound, a cobalt compound, a lead compound, a zinc compound, an aluminum compound, or a titanium compound, more preferably the zinc compound, the aluminum compound, or the titanium compound, and most preferably the titanium compound; the titanium compound may be tetrabutyl titanate or tetraisopropyl titanate; and compared with other compounds, the titanium compound has a lower residual content in a product or downstream product and lower toxicity. It is particularly suitable for preparing biodegradable polyesters, which can directly enter the environment in the form of compost bags or mulching films.

In the present invention, based on a total mass of the raw material for the reaction (the dicarboxylic acid, the diol, and optionally the cross-linking agent) as 100 wt%, a total mass of the catalyst is 0.001-1 wt%.

In the present invention, other auxiliary agents may be added during the reaction in the step (3) according to actual needs; and the other auxiliary agents include, but are not limited to, a catalyst passivator, a color stabilizer, an activator, etc.

The catalyst passivator includes, but is not limited to, a phosphorus compound; the phosphorus compound includes, but is not limited to, one or more of phosphorous acid and phosphoric acid; and based on a mass of the pre-polymerization product as 100 wt%, a mass of the catalyst passivator is 0.001-0.1 wt%, and preferably 0.01-0.05 wt%. Exemplarily, when a highly active titanium compound is selected as the catalyst, the catalyst passivator may be added, where a molar ratio of Ti to P is (1.1-1.5):1, and particularly preferably (1.1-1.3):1.

The color stabilizer includes, but is not limited to, a phosphorus compound; the phosphorus compound includes, but is not limited to, one or more of phosphoric acid, phosphorous acid, triphenyl phosphite, triphenyl phosphate, sodium hypophosphite, and sodium phosphite; and the use of the color stabilizer usually results in a decrease in condensation rate. Therefore, the triphenyl phosphate, which does not adversely affect the condensation rate, is preferably used as the color stabilizer. Based on the mass of the pre-polymerization product as100 wt%, a mass of the color stabilizer is 0.001-1.5 wt%, preferably 0.01-1.0 wt%; and when the catalyst is selected from the titanium compound, a molar ratio of Ti to P is 1:(0.3-1.0), particularly preferably 1:(0.5-1.0).

The activator includes, but is not limited to, a phosphorus compound; the phosphorus compound includes, but is not limited to, one or more of disodium hydrogen phosphate, calcium hypophosphite, calcium phosphite, calcium phosphate, sodium hypophosphite, sodium phosphite, triphenyl phosphite, triphenyl phosphate, trimethyl phosphate, triethyl phosphate, tripropyl phosphate, and tributyl phosphate. Based on the mass of the pre-polymerization product as 100 wt%, a mass of the activator is 0.001-1.5 wt%, preferably 0.01-1.0 wt%; and when the catalyst is selected from the titanium compound, a molar ratio of Ti to P is (1.0-1.5):1, particularly preferably (1.1-1.3):1.

More preferably, the color stabilizer and the activator are used in combination, and for example, triphenyl phosphate and disodium hydrogen phosphate are used in combination.

In the present invention, after the polycondensation reaction, the method further includes a chain propagation reaction, that is, a product (polycondensation product) obtained from the polycondensation reaction is allowed to react with a chain extender to obtain the aliphatic polyester.

In the present invention, the chain extender includes one or more of an isocyanate, a peroxide, an epoxide, oxazoline, oxazine, caprolactam, or carbodiimide.

In the present invention, the isocyanate may use an aromatic diisocyanate and/or an aliphatic diisocyanate, and the aromatic diisocyanate may be toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate; and particularly preferably, the diphenylmethane-2,2'-diisocyanate, the diphenylmethane-2,4'-diisocyanate, or the diphenylmethane-4,4'-diisocyanate is used. The aromatic diisocyanate may also use a polynuclear aromatic diisocyanate, such as tris(4-isocyanato-phenyl)methane having three rings, which may be formed during a production process of a diisocyanate having one or two rings. The aliphatic diisocyanate may be a linear or branched alkylene diisocyanate containing 2-20 carbon atoms, or a cycloalkylene diisocyanate containing 3-20 carbon atoms; and exemplarily, the aliphatic diisocyanate includes hexamethylene diisocyanate, pentamethylene diisocyanate, isophorone diisocyanate, or methylene bis(4-isocyanatocyclohexane) diisocyanate. The hexamethylene diisocyanate is particularly preferred.

In the present invention, based on a total mass of the polycondensation product, a mass of the isocyanate may be 0.05-2 wt%, particularly preferably 0.1-1.5 wt%.

In the present invention, the peroxide may be one or more of benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, or tert-butylperoxy cumene.

In the present invention, based on the total mass of the polycondensation product, a mass of the peroxide may be 0.1-2 wt%, particularly preferably 0.2-1 wt%.

In the present invention, the epoxide may be one or more of diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, polybutylene glycol diglycidyl ether, and a copolymer containing an epoxy group based on styrene, acrylate and/or methacrylate.

In the present invention, based on the total mass of the polycondensation product, a mass of the epoxide may be 0.1-2 wt%, preferably 0.2-1 wt%.

In the present invention, the oxazoline may be selected from one or more of 2,2'-bis(2-oxazoline), bis(2-oxazolinyl)methane, 1,2-bis(2-oxazolinyl)ethane, 1,3-bis(2-oxazolinyl)propane, 1,4-bis(2-oxazolinyl)butane, 1,4-bis(2-oxazolinyl)benzene, 1,2-bis(2-oxazolinyl)benzene, or 1,3-bis(2-oxazolinyl)benzene. The oxazine may be selected from one or more of 2,2'-bis(2-dioxazine), bis(2-dioxazinyl)methane, 1,2-bis(2-dioxazinyl)ethane, 1,3-bis(2-dioxazinyl)propane, 1,4-bis(2-dioxazinyl)butane, 1,4-bis(2-dioxazinyl)benzene, 1,2-bis(2-dioxazinyl)benzene, or 1,3-bis(2-dioxazinyl)benzene. The carbodiimide may be selected from one or more of N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

In the present invention, based on the total mass of the polycondensation product, the mass of the oxazoline, the oxazine, the caprolactam, and the carbodiimide is each independently 0.1-2 wt%, preferably 0.2-1 wt%.

In the present invention, the chain propagation reaction is carried out at a temperature of 170-240°C, and further preferably, the reaction is carried out at a temperature of 180-220°C; and the reaction is carried out under superatmospheric pressure or atmospheric pressure, depending on the system used.

In the present invention, the chain propagation reaction may be carried out in an extruder, a continuous kneader (List reactor), or a static mixer. The extruder may be a single-screw extruder or a twin-screw extruder; and the static mixer may use SMR, SMX, or SMXL components, or a combination thereof. Examples of the List reactor include a single-shaft DISCOTHERM B or twin-shaft CRP or ORP reactor, the chain propagation reaction is preferably carried out in the extruder, and a residence time in the extruder is 2-15 min, more preferably 4-10 min.

In the present invention, the aliphatic polyester may also be prepared by the following method, that is, in step (1), succinic acid and/or a succinic acid derivative and sebacic acid and/or a sebacic acid derivative separately react with 1,4-butanediol to obtain two esterification products, and then the two esterification products are subjected to a subsequent pre-polymerization reaction, a polycondensation reaction, and optionally a chain propagation reaction.

Exemplarily, the preparation method specifically includes the following steps:
step (1-1): allowing succinic acid and/or a succinic acid derivative, 1,4-butanediol, and optionally a cross-linking agent to react under conditions of a temperature of 150-180°C and a pressure of 0.7-1.1 bar for 2-5 h to obtain an esterification product A with a carboxyl content of 450-750 mol/t; and
step (1-2): allowing sebacic acid and/or a sebacic acid derivative to react with 1,4-butanediol under conditions of a temperature of 180-210°C and a pressure of 0.6-1.1 bar for 3-6 h to obtain an esterification product B with a carboxyl content of 300-620 mol/t; and then mixing the esterification product A with the esterification product B, and carrying out a pre-polymerization reaction, a polycondensation reaction, and optionally a chain propagation reaction, where conditions for the pre-polymerization reaction, the polycondensation reaction, and optionally the chain propagation reaction are selected from the same ranges as those of the step (2), the step (3), and the aforementioned chain propagation reaction.

In a second aspect, the present invention provides a polyester composition, where the polyester composition includes a polymer A and a polymer B; and the polymer A includes the aliphatic polyester described in the first aspect.

Preferably, the polymer A further includes a second polyester.

Preferably, the second polyester includes at least one of polylactic acid (PLA), an aliphatic-aromatic polyester, or other aliphatic polyesters.

Preferably, the aliphatic-aromatic polyester includes at least one of poly(butylene succinate-co-terephthalate) (PBST), poly(butylene adipate-co-terephthalate) (PBAT), poly(butylene sebacate-co-terephthalate) (PBSeT), or poly(butylene adipate-co-furandicarboxylate) (PBAF).

Preferably, the other aliphatic polyesters include at least one of poly(butylene succinate) (PBS), poly(butylene succinate-co-adipate) (PBSA), or poly(butylene sebacate) (PBSe).

In the present invention, the second polyester may be selected as a corresponding polyester according to actual needs, and is not limited to the polyesters mentioned above.

Preferably, the polymer B includes at least one of starch, cellulose, chitin, chitosan, alginate, protein, gelatin, natural rubber, lignin, or derivatives of aforementioned substances.

In the present invention, the protein includes, but is not limited to, glutelin, zein, casein, collagen, etc.; and the lignin includes unpurified lignin, purified hydrolyzed lignin, alkali lignin, etc. The starch may also be used in allosteric or gelatinized forms or a filler form. The starch may represent a continuous phase or a dispersed phase, and may also be present in a co-continuous form.

Preferably, the polyester composition further includes an auxiliary agent.

In the present invention, the auxiliary agent may be added according to actual needs, including but not limited to at least one of an antioxidant, a lubricant, a light stabilizer, a mold release agent, or an antistatic agent.

In the present invention, the type of the auxiliary agent is not excessively limited, a conventional auxiliary agent may be used, and exemplarily, the antioxidant includes, but is not limited to, any one of antioxidant 1010, antioxidant 1076, antioxidant 168, antioxidant 164, antioxidant DLTP, or antioxidant TPP.

The light stabilizer includes, but is not limited to, at least one of hindered amine light stabilizers (such as light stabilizer 770, light stabilizer 622, light stabilizer 944, etc.), benzophenone light stabilizers (such as UV531), or benzotriazole light stabilizers.

The lubricant includes, but is not limited to, at least one of esters (such as polyethylene glycol esters and polyol esters), montanates, ethylene bis-stearamide, or polyethylene wax.

The mold release agent includes, but is not limited to, at least one of inorganic mold release agents (such as talc powder, mica powder, clay, etc.), organic mold release agents (such as fatty acids, paraffin, glycerol, petrolatum, etc.), or polymer mold release agents (such as silicone oil, polyethylene glycol, low-molecular-weight polyethylene, etc.).

The antistatic agent includes, but is not limited to, at least one of cationic antistatic agents (such as quaternary ammonium salts), anionic antistatic agents (such as alkyl sulfonates and phosphates), amphoteric antistatic agents (such as amphoteric imidazoline compounds), nonionic antistatic agents (such as hydroxyethyl alkylamines, fatty amides, polyoxyethylenes, and polyol esters), or polymer antistatic agents (such as polyethers).

As a preferred technical solution of the present invention, in parts by weight, the polyester composition includes 50-95 parts of the aliphatic polyester (for example, may be 50 parts, 55 parts, 60 parts, 65 parts, 70 parts, 75 parts, 80 parts, 85 parts, 90 parts, 95 parts, or a range between any of the above numerical values, preferably 52-92 parts, and further preferably 56-82 parts), 1-20 parts of the second polyester (for example, may be 1 part, 2 parts, 4 parts, 6 parts, 8 parts, 10 parts, 12 parts, 14 parts, 16 parts, 18 parts, 20 parts, or a range between any of the above numerical values, preferably 1.5-15 parts, and more preferably 2.5-8.5 parts), 1-30 parts of the polymer B (for example, may be 1 part, 2 parts, 4 parts, 6 parts, 8 parts, 10 parts, 12 parts, 14 parts, 16 parts, 18 parts, 20 parts, 22 parts, 24 parts, 25 parts, 26 parts, 28 parts, 30 parts, or a range between any of the above numerical values, preferably 9-27 parts, and more preferably 21-26.5 parts), and 0-15 parts of the auxiliary agent (for example, may be 1 part, 2 parts, 4 parts, 6 parts, 8 parts, 10 parts, 12 parts, 14 parts, 15 parts, or a range between any of the above numerical values).

In the present invention, a method for preparing the polyester composition includes: mixing and extruding the polymer A with the polymer B and optionally the auxiliary agent to obtain the polyester composition, where an extruder includes a reactive extruder, and the extruder may be a single-screw extruder, a twin-screw extruder, or a multi-screw extruder; and a temperature of the extruding is 140-220°C, and a screw rotation speed during the extruding is 200-500 rpm.

In a third aspect, the present invention provides a packaging film, where the packaging film includes the aliphatic polyester described in the first aspect or the polyester composition described in the second aspect.

In the present invention, other substances may also be added into the packaging film according to actual needs, such as a colorant, a pigment, an inorganic filler, etc.; the pigment includes, but is not limited to, titanium dioxide, etc.; and the inorganic filler includes, but is not limited to, talc powder, calcium carbonate, kaolin, etc.

Preferably, a degree of orientation of the packaging film is 0.7-1.6, further preferably 0.8-1.4, and more preferably 0.9-1.2.

In the present invention, the degree of orientation of the packaging film refers to a ratio of longitudinal tear strength to transverse tear strength; the higher degree of orientation indicates higher longitudinal tear resistance and lower transverse tear resistance, making transverse rupture more likely to occur during use; the lower degree of orientation indicates lower longitudinal tear resistance and higher transverse tear resistance, making longitudinal fracture more likely to occur during use; and the degree of orientation closer to 1 indicates more uniformity in longitudinal and transverse tear resistance of the material.

In the present invention, according to ASTM D1922, the Elmendorf tear strength of the packaging film is tested in transverse and longitudinal directions at a test sample thickness of 55±3 µm, and then the degree of orientation is a ratio of the longitudinal Elmendorf tear strength to the transverse Elmendorf tear strength.

In the present invention, according to ISO 527-2:2012, a longitudinal tensile strength of the packaging film is ≥ 18 MPa, and a transverse tensile strength is ≥ 16 MPa; and more preferably, the longitudinal tensile strength is ≥ 20 MPa, and the transverse tensile strength is ≥ 18 MPa.

In the present invention, when a biological disintegration rate of the packaging film is ≥ 90%, a disintegration period is ≤ 21 weeks, more preferably ≤ 15 weeks.

In the present invention, the biological disintegration rate and disintegration period of the packaging film are obtained by the following method:
measuring and recording an initial mass of the packaging film with a length × width of 10 cm × 10 cm and a thickness of 55±3 µm as m₀, conducting a home composting test according to the standard AS5810, sampling once a week, sieving, retaining the residual packaging film with a length × width of greater than or equal to 2 cm × 2 cm on a sieve mesh, cleaning a residue on the packaging film, drying, then weighing, recording a sample mass as mₙ, and when the biological disintegration rate of the packaging film is [(m₀-mₙ)/m₀]≥90%, recording the corresponding disintegration period n.

In the present invention, the packaging film includes a food packaging film, an industrial packaging film, an agricultural mulching film, a shopping bag, a garbage bag, etc.

The aliphatic polyester, the polyester composition containing the aliphatic polyester, and the packaging film prepared therefrom in the present invention are all biodegradable.

For the present invention, if a substance or a substance mixture shows, as defined in DIN EN 13432, a biodegradation percentage degree of at least 90%, the substance or the substance mixture has the characteristic of "biodegradability".

According to DIN EN 13432, during composting, air free of CO₂ is introduced into mature compost, and the compost is allowed to undergo a specific temperature process. Herein, the biodegradability is defined as a biodegradation percentage degree represented by a ratio of a net amount of CO₂ released by a sample (after subtracting an amount of CO₂ released by compost without the sample) to a maximum amount of CO₂ that can be released by the sample (calculated based on a carbon content in the sample). After the composting for only a few days, the biodegradable polyester and the biodegradable polyester composition usually show obvious signs of degradation, such as fungal growth, cracking, and perforation, etc.

Other methods for determining the biodegradability are also described in ASTM D5338 and ASTM D6400.

The numerical ranges in the present invention include not only the above-mentioned enumerated point values but also any point values within the above-mentioned numerical ranges that are not enumerated, and due to space limitations and for the sake of simplicity, all specific point values included within the ranges are not exhaustively enumerated in the present invention.

Compared with the prior art, the present invention has the following beneficial effects.

According to the aliphatic polyester provided by the present invention, by controlling the contents of succinic acid and sebacic acid within specific ranges, poly(butylene succinate-co-sebacate) with uniform transverse and longitudinal tear resistance can be obtained; by using the poly(butylene succinate-co-sebacate) as a base resin for preparing starch-based biodegradable materials, the problems of anisotropy and poor uniformity in longitudinal and transverse tear resistance of the starch-based biodegradable materials are solved, and meanwhile, it can also be ensured that the materials have good tensile properties and degradability; and the home composting requirements can be met.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

In the present invention, all materials used can be purchased commercially or prepared by conventional methods; and unless otherwise specified, the materials used in the present invention are as follows:
1,4-butanediol: purchased from Xinjiang Markorchem Co., Ltd.;
succinic acid: purchased from Shandong Landian Biotechnology Co., Ltd.;
sebacic acid: purchased from Hengshui Jinghua Chemical Co., Ltd.;
glycerol: purchased from Aladdin;
tetrabutyl titanate: purchased from Jianyi Chemical Import and Export Co., Ltd.;
hexamethylene diisocyanate: purchased from Aladdin;
starch: purchased from Shandong Shouguang Juneng Golden Corn Development Co., Ltd.; and
polylactic acid: PLA, KB600 NF30, derived from Zhuhai Jinfa Biomaterials Co., Ltd.

In the present invention, test methods for Mn, an intrinsic viscosity, a carboxyl content, and molar contents of a succinic acid residue and a sebacic acid residue in an aliphatic polyester are as follows.
1. Mn is tested using a gel permeation chromatograph (GPC) as follows: using a chromatographic system for determination at 40°C, with a set of three tandem columns (with a particle diameter of 5 µm and porosities of 500 Å, 1,000 Å, and 10,000 Å, respectively) and a refractive index detector, chloroform as an eluent (at an elution flow rate of 1 mL/min), and polystyrene as a reference standard.
2. The intrinsic viscosity is tested according to the standard GB/T 17931-1999, specifically including: adding 0.1250±0.0002 g of a sample into 25 mL of a mixed solution of phenol and o-dichlorobenzene in a weight ratio of 1:1, heating until the sample is completely dissolved, and after the sample is completely dissolved, conducting testing using an Ubbelohde viscometer at a test temperature of 25±0.05°C.
3. The carboxyl content is tested according to the standard GB/T 32366-2015 and is specifically as follows: dissolving 1 g of the sample in 50 mL of a mixed solvent of phenol and trichloromethane in a volume ratio of 2:3; using a solution of potassium hydroxide in ethanol with a concentration of 0.01 mol/L as a standard titration solution and a bromophenol blue solution with a concentration of 0.2% as an indicator; conducting a blank test according to a method for testing the carboxyl content of the above test sample; and testing the sample in parallel twice, where a difference value between two test results is required to be less than or equal to 2 mol/t, and a final result is an average value of the two test results.
4. The molar content may be tested by a ¹HNMR method and specifically includes: weighing and dissolving 20 mg of the aliphatic polyester sample in 0.6 mL of deuterated chloroform, and then measuring its ¹HNMR at room temperature using a Bruker AV 500 nuclear magnetic resonance spectrometer; and performing integration on characteristic peaks of the succinic acid residue and the sebacic acid residue (a characteristic chemical shift of the succinic acid residue is about 2.63 ppm, representing 4 hydrogens on two methylene groups -CH₂-CH₂- in succinic acid; and a characteristic chemical shift of the sebacic acid residue is about 1.30 ppm, representing 8 hydrogens on four methylene groups -CH₂-CH₂-CH₂-CH₂- in the middle of sebacic acid), and obtaining respective molar contents of the succinic acid residue and the sebacic acid residue in the aliphatic polyester according to proportions of peak areas. It should be noted that the contents of the succinic acid residue and the sebacic acid residue in the aliphatic polyester in Table 1 are calculated based on a total molar content of the succinic acid residue and the sebacic acid residue as 100 mol%. For example, when an integration area of the succinic acid residue is I1 and an integration area of the sebacic acid residue is I2, the molar percentage content of the succinic acid residue in the aliphatic polyester is I1/(I1+I2)×100%.

### Examples 1-13 and Comparative Examples 1 and 2

Examples 1-13 and Comparative Examples 1 and 2 respectively provide an aliphatic polyester, where the molecular structure composition, Mn, acid value, and intrinsic viscosity of the aliphatic polyester are shown in Table 1.

**Table 1**

| | Succinic acid residue content (mol%) | Sebacic acid residue content (mol%) | Mn | Carboxyl content (mol/t) | Intrinsic viscosity (dL/g) |
|---|---|---|---|---|---|
| Example 1 | 65 | 35 | 67389 | 17.8 | 1.84 |
| Example 2 | 68 | 32 | 75471 | 22.4 | 1.90 |
| Example 3 | 62.2 | 37.8 | 61788 | 25.3 | 1.78 |
| Example 4 | 65.2 | 34.8 | 66421 | 15.4 | 1.86 |
| Example 5 | 64.9 | 35.1 | 65945 | 18.2 | 1.83 |
| Example 6 | 65.3 | 34.7 | 57492 | 18.9 | 1.71 |
| Example 7 | 65.1 | 34.9 | 79820 | 19.6 | 1.96 |
| Example 8 | 64.7 | 35.3 | 54210 | 16.8 | 1.67 |
| Example 9 | 64.8 | 35.2 | 92560 | 21.4 | 2.02 |
| Example 10 | 65.1 | 34.9 | 43154 | 29.2 | 1.55 |
| Example 11 | 65 | 35 | 132146 | 33.4 | 2.14 |
| Example 12 | 65.1 | 34.9 | 64782 | 18.2 | 1.48 |
| Example 13 | 65.2 | 34.8 | 70326 | 18.4 | 2.30 |
| Comparative Example 1 | 71 | 29 | 65424 | 21.2 | 1.83 |
| Comparative Example 2 | 55.4 | 44.6 | 66762 | 18.2 | 1.84 |

Methods for preparing the aliphatic polyesters provided in Examples 1-13 and Comparative Examples 1 and 2 are as follows.

### Example 1

A method for preparing the aliphatic polyester is provided, which specifically includes the following steps:
(1) physically mixing 350 kg of succinic acid, 323 kg of sebacic acid, 575 kg of 1,4-butanediol, and 2.76 kg of glycerol, and after the mixing is completed, transferring the mixture into an esterification reactor to carry out an esterification reaction under conditions of a temperature of 200°C and a pressure of 1.1 bar for 4 h to obtain an esterification product;
(2) transferring the esterification product obtained in the step (1) into a vertical reactor with a stirrer, adding 1.1 kg of tetrabutyl titanate, and carrying out a pre-polymerization reaction under conditions of a temperature of 243°C and a pressure of 0.6 bar for 110 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.1 mbar for 80 min to obtain the aliphatic polyester.

### Example 2

A method for preparing the aliphatic polyester is provided, which specifically includes the following steps:
(1) physically mixing 373 kg of succinic acid, 300 kg of sebacic acid, 575 kg of 1,4-butanediol, and 2.76 kg of glycerol, and after the mixing is completed, transferring the mixture into an esterification reactor to carry out an esterification reaction under conditions of a temperature of 190°C and a pressure of 1.1 bar for 4 h to obtain an esterification product;
(2) transferring the esterification product obtained in the step (1) into a vertical reactor with a stirrer, adding 1.1 kg of tetrabutyl titanate, and carrying out a pre-polymerization reaction under conditions of a temperature of 240°C and a pressure of 0.7 bar for 120 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.1 mbar for 100 min to obtain the aliphatic polyester.

### Example 3

A method for preparing the aliphatic polyester is provided, which specifically includes the following steps:
(1) physically mixing 330 kg of succinic acid, 343 kg of sebacic acid, 575 kg of 1,4-butanediol, and 2.76 kg of glycerol, and after the mixing is completed, transferring the mixture into an esterification reactor to carry out an esterification reaction under conditions of a temperature of 180°C and a pressure of 0.9 bar for 3.5 h to obtain an esterification product;
(2) transferring the esterification product obtained in the step (1) into a vertical reactor with a stirrer, adding 1.1 kg of tetrabutyl titanate, and carrying out a pre-polymerization reaction under conditions of a temperature of 242°C and a pressure of 0.6 bar for 100 min to obtain a pre-polymerization product; and
(3) transferring the pre-polymerization product obtained in the step (2) into a horizontal reactor with a stirrer to carry out a polycondensation reaction under conditions of a temperature of 243°C and a pressure of 1.3 mbar for 85 min to obtain the aliphatic polyester.

### Example 4

A method for preparing the aliphatic polyester is provided, which is only different from Example 1 in that the glycerol is not added in step (1), a polycondensation reaction in step (3) is carried out under conditions of a temperature of 243°C and a pressure of 1.1 mbar for a polycondensation time of 60 min, and in addition, after the polycondensation reaction in the step (3), the method further includes extruding an obtained polycondensation product with hexamethylene diisocyanate (at a content of 0.3 wt% of the mass of the polycondensation product) in a reactive extruder at a temperature of 200°C for a residence time of 8 min. Other raw materials, steps, and polymerization processes are all the same as those in Example 1.

### Example 5

A method for preparing the aliphatic polyester is provided, which is only different from Example 1 in that step (1) includes the following steps:
(1-1) physically mixing 350 kg of succinic acid with 300 kg of 1,4-butanediol and 2.76 kg of glycerol, and after the mixing is completed, transferring the mixture into an esterification reactor to carry out an esterification reaction under conditions of a temperature of 165°C and a pressure of 1.1 bar for 4 h to obtain an esterification product A; and
(1-2) physically mixing 323 kg of sebacic acid with 275 kg of 1,4-butanediol, and after the mixing is completed, transferring the mixture into an esterification reactor to carry out an esterification reaction under conditions of a temperature of 200°C and a pressure of 0.9 bar for 3 h to obtain an esterification product B. After the esterification product A and the esterification product B are mixed, steps (2) and (3) are carried out. Other raw materials, steps, and polymerization processes are all the same as those in Example 1.

### Example 6

A method for preparing the aliphatic polyester is provided, which is different from Example 1 in that a pre-polymerization product obtained in step (2) is transferred into a horizontal reactor with a stirrer to carry out a polycondensation reaction under conditions of a temperature of 250°C and a pressure of 1.4 mbar for 70 min. Other raw materials, steps, and polymerization processes are all the same as those in Example 1.

### Example 7

A method for preparing the aliphatic polyester is provided, which is different from Example 4 in that after a polycondensation reaction in step (3), the method further includes extruding an obtained polycondensation product with hexamethylene diisocyanate (at a content of 0.46 wt% of the mass of the polycondensation product) in a reactive extruder at a temperature of 210°C for a residence time of 5 min. Other raw materials, steps, and polymerization processes are all the same as those in Example 4.

### Example 8

A method for preparing the aliphatic polyester is provided, which is different from Example 1 in that the addition amount of glycerol in step (1) is 2.45 kg, meanwhile, an esterification reaction is adjusted to be carried out under conditions of an esterification temperature of 190°C and a pressure of 1.0 bar for 3 h to obtain an esterification product, and in step (3), a polycondensation reaction is carried out under conditions of a temperature of 243°C and a pressure of 1.0 mbar for 70 min. Other raw materials, steps, and polymerization processes are all the same as those in Example 1.

### Example 9

A method for preparing the aliphatic polyester is provided, which is different from Example 1 in that in step (3), a pre-polymerization product obtained in step (2) is transferred into a horizontal reactor with a stirrer to carry out a polycondensation reaction under conditions of a temperature of 248°C and a pressure of 1.2 mbar for 50 min, and in step (4), a polycondensation product obtained in the step (3) is extruded with hexamethylene diisocyanate (at a content of 0.25 wt% of the mass of the polycondensation product) in a reactive extruder at a temperature of 220°C for a residence time of 10 min. Other raw materials, steps, and polymerization processes are all the same as those in Example 1.

### Example 10

A method for preparing the aliphatic polyester is provided, which is different from Example 1 in that the glycerol is not added in step (1), meanwhile, an esterification reaction is adjusted to be carried out under conditions of an esterification temperature of 180°C and a pressure of 1.1 bar for 3 h to obtain an esterification product, and in step (3), a polycondensation reaction is carried out under conditions of a temperature of 245°C and a pressure of 1.5 mbar for 75 min. Other raw materials, steps, and polymerization processes are all the same as those in Example 1.

### Example 11

A method for preparing the aliphatic polyester is provided, which is different from Example 1 in that in step (3), a pre-polymerization product obtained in step (2) is transferred into a horizontal reactor with a stirrer to carry out a polycondensation reaction under conditions of a temperature of 242°C and a pressure of 1.4 mbar for 45 min, and in step (4), a polycondensation product obtained in the step (3) is extruded with hexamethylene diisocyanate (at a content of 0.70 wt% of the mass of the polycondensation product) in a reactive extruder at a temperature of 220°C for a residence time of 13 min. Other raw materials, steps, and polymerization processes are all the same as those in Example 1.

### Example 12

A method for preparing the aliphatic polyester is provided, which specifically includes the following steps:
(1) physically mixing 350 kg of succinic acid, 323 kg of sebacic acid, 575 kg of 1,4-butanediol, and 12.0 kg of glycerol, and after the mixing is completed, transferring the mixture into an esterification reactor to carry out an esterification reaction under conditions of a temperature of 180°C and a pressure of 1.1 bar for 2 h to obtain an esterification product;
(2) transferring the esterification product obtained in the step (1) into a vertical reactor with a stirrer, adding 0.8 kg of tetrabutyl titanate, and carrying out a pre-polymerization reaction under conditions of a temperature of 235°C and a pressure of 0.5 bar for 120 min to obtain a pre-polymerization product; and
(3) transferring the pre-polymerization product obtained in the step (2) into a horizontal reactor with a stirrer to carry out a polycondensation reaction under conditions of a temperature of 244°C and a pressure of 0.9 mbar for 70 min to obtain the aliphatic polyester.

### Example 13

A method for preparing the aliphatic polyester is provided, which specifically includes the following steps:
(1-1) physically mixing 350 kg of succinic acid with 300 kg of 1,4-butanediol and 0.5 kg of pentaerythritol, and after the mixing is completed, transferring the mixture into an esterification reactor to carry out an esterification reaction under conditions of a temperature of 160°C and a pressure of 1.1 bar for 3 h to obtain an esterification product A;
(1-2) physically mixing 323 kg of sebacic acid with 275 kg of 1,4-butanediol, and after the mixing is completed, transferring the mixture into an esterification reactor to carry out an esterification reaction under conditions of a temperature of 190°C and a pressure of 1.0 bar for 4 h to obtain an esterification product B;
(2) mixing and transferring the esterification product A obtained in the step (1-1) and the esterification product B obtained in the step (1-2) into a vertical reactor with a stirrer, adding 1.0 kg of tetrabutyl titanate, and carrying out a pre-polymerization reaction under conditions of a temperature of 240°C and a pressure of 0.7 bar for 105 min to obtain a pre-polymerization product;
(3) transferring the pre-polymerization product obtained in the step (2) into a horizontal reactor with a stirrer to carry out a polycondensation reaction under conditions of a temperature of 242°C and a pressure of 1.1 mbar for 70 min to obtain a polycondensation product; and (4) extruding the polycondensation product obtained in the step (3) with hexamethylene diisocyanate (at a content of 0.57 wt% of the mass of the polycondensation product) in a reactive extruder at a temperature of 180°C for a residence time of 11 min. Other raw materials, steps, and polymerization processes are all the same as those in Example 1.

### Comparative Example 1

A method for preparing the aliphatic polyester is provided, which specifically includes the following steps:
(1) physically mixing 350 kg of succinic acid, 245 kg of sebacic acid, 534 kg of 1,4-butanediol, and 2.46 kg of glycerol, and after the mixing is completed, transferring the mixture into an esterification reactor to carry out an esterification reaction under conditions of a temperature of 200°C and a pressure of 1.1 bar for 3.5 h to obtain an esterification product;
(2) transferring the esterification product obtained in the step (1) into a vertical reactor with a stirrer, adding 0.92 kg of tetrabutyl titanate, and carrying out a pre-polymerization reaction under conditions of a temperature of 245°C and a pressure of 0.52 bar for 120 min to obtain a pre-polymerization product; and
(3) transferring the pre-polymerization product obtained in the step (2) into a horizontal reactor with a stirrer to carry out a polycondensation reaction under conditions of a temperature of 246°C and a pressure of 1.3 mbar for 90 min to obtain the aliphatic polyester.

### Comparative Example 2

A method for preparing the aliphatic polyester is provided, which specifically includes the following steps:
(1) physically mixing 250 kg of succinic acid, 345 kg of sebacic acid, 480 kg of 1,4-butanediol, and 2.46 kg of glycerol, and after the mixing is completed, transferring the mixture into an esterification reactor to carry out an esterification reaction under conditions of a temperature of 190°C and a pressure of 1.1 bar for 4 h to obtain an esterification product;
(2) transferring the esterification product obtained in the step (1) into a vertical reactor with a stirrer, adding 0.92 kg of tetrabutyl titanate, and carrying out a pre-polymerization reaction under conditions of a temperature of 243°C and a pressure of 0.52 bar for 130 min to obtain a pre-polymerization product; and
(3) transferring the pre-polymerization product obtained in the step (2) into a horizontal reactor with a stirrer to carry out a polycondensation reaction under conditions of a temperature of 246°C and a pressure of 1.2 mbar for 80 min to obtain the aliphatic polyester.

### Application Examples 1-13 and Comparative Application Examples 1 and 2

Application Examples 1-13 and Comparative Application Examples 1 and 2 respectively provide a polyester composition. In parts by weight, the polyester composition includes 63 parts of an aliphatic polyester, 2 parts of polylactic acid, 27 parts of starch, 4 parts of glycerol, 3 parts of water, and 1 part of other auxiliary agents (including 0.5 part of a compound antioxidant composed of antioxidant 1010 and antioxidant 168 in a mass ratio of 1:1, and 0.5 part of a lubricant (ethylene bis-stearamide)). The aliphatic polyester is respectively provided by Examples 1-13 and Comparative Examples 1-2. A method for preparing the polyester composition includes: mixing various components according to formulation amounts, and adding the same into a twin-screw extruder (with an aspect ratio of 48:1 and a diameter of 40 mm) for melt mixing and extrusion granulation at extrusion temperatures sequentially as follows: 120°C in zone 1, 160°C in zone 2, 180°C in zones 3 to 9, 170°C in zone 10, and 170°C in zone 11, at a die head temperature of 190°C, a screw rotation speed of 380 rpm, and a vacuum degree of -0.60 kg/cm², to obtain the polyester composition.

### Performance testing

The polyester compositions provided by Application Examples 1-13 and Comparative Application Examples 1-2 were subjected to film blowing processing to obtain packaging films; and the tear resistance uniformity, disintegration period, and tensile strength of the packaging films were tested. Specific test results are shown in Table 2.

Process parameters for the film blowing processing are as follows: a screw aspect ratio was 32:1, a spiral flow channel type die head was used, an air ring was a double-port air ring, a film blowing processing temperature was set at 140°C, a blow-up ratio was 3.5, and a film blowing thickness was 55±3 µm. Then, the tear resistance uniformity, the disintegration period, and the tensile strength were tested.
(1) Tear resistance uniformity: Under conditions of 25±5°C and a humidity of 55±5%, the Elmendorf tear strength of a sample in a transverse direction (ε_{TD}) and a longitudinal direction (ε_{MD}) was tested according to the standard ASTM D1922-2015, and the degree of orientation was calculated as follows: degree of orientation = ε_{MD}/ε_{TD}.
(2) Disintegration period:
A sample was weighed, the aliphatic polyester was molded into a product with a dimension of 10 cm × 10 cm, an initial mass of the sample was obtained and recorded as m₀, a home composting test was conducted according to the standard AS5810, sampling was performed once a week, sieving was performed, a residual packaging film with a length × width of greater than or equal to 2 cm × 2 cm on a sieve mesh was retained, a residue on the packaging film was cleaned, drying and weighing were performed, a mass of the sample was recorded as mₙ, and when a biological disintegration rate of the sample was [(m₀-mₙ)/m₀]≥90%, the corresponding disintegration period n was recorded.
(3) Tensile strength: The test was conducted according to ISO 527-2:2012.

**Table 2**

| | σ_{MD} (MPa) | σ_{TD} (MPa) | Degree of orientation | Disintegration period (week) |
|---|---|---|---|---|
| Application Example 1 | 19.4 | 17.5 | 1.07 | 13 |
| Application Example 2 | 21.4 | 18.6 | 0.74 | 16 |
| Application Example 3 | 18.2 | 16.3 | 1.25 | 12 |
| Application Example 4 | 19.7 | 17.8 | 1.06 | 14 |
| Application Example 5 | 19.5 | 17.3 | 1.10 | 12 |
| Application Example 6 | 19.2 | 17.1 | 0.92 | 12 |
| Application Example 7 | 20.0 | 17.8 | 1.22 | 15 |
| Application Example 8 | 18.8 | 16.7 | 0.90 | 12 |
| Application Example 9 | 21.7 | 18.8 | 1.27 | 16 |
| Application Example 10 | 18.5 | 16.5 | 0.86 | 10 |
| Application Example 11 | 22.0 | 19.2 | 1.34 | 21 |
| Application Example 12 | 18.8 | 17.2 | 0.87 | 12 |
| Application Example 13 | 19.9 | 18.1 | 1.22 | 14 |
| Comparative Application Example 1 | 23.4 | 19.8 | 0.39 | 22 |
| Comparative Application Example 2 | 15.6 | 13.7 | 1.72 | 11 |

It can be known from Table 2 that according to the aliphatic polyester provided by the present invention, by controlling the molar contents of succinic acid and sebacic acid within specific ranges, the aliphatic polyester has excellent uniformity in terms of longitudinal and transverse tear resistance, with the degree of orientation approaching 1; and meanwhile, also has good tensile properties, and under home composting conditions, has a high biological disintegration rate and a short disintegration period, thereby meeting home composting requirements.

The specific examples described above are to further describe the objectives, technical solutions, and beneficial effects of the present invention in detail. It should be understood that the above descriptions are only specific examples of the present invention and are not intended to limit the present invention, and any modifications, equivalent substitutions, improvements, and the like made within the spirit and principles of the present invention should all be included within the scope of protection of the present invention.

## Claims

1. An aliphatic polyester, comprising a dicarboxylic acid residue and a diol residue, wherein
the dicarboxylic acid residue comprises the following residues:
a1) based on a total molar percentage content of a1) and a2) as 100 mol%, 61.2-69 mol% of a succinic acid residue; and
a2) based on the total molar percentage content of a1) and a2) as 100 mol%, 31-38.8 mol% of a sebacic acid residue; and
the diol residue is selected from a 1,4-butanediol residue with a molar content at least equal to that of the dicarboxylic acid residue.

2. The aliphatic polyester according to claim 1, wherein the dicarboxylic acid residue comprises the following residues:
a1) based on the total molar percentage content of a1) and a2) as 100 mol%, 63.5-67.5 mol% of the succinic acid residue; and
a2) based on the total molar percentage content of a1) and a2) as 100 mol%, 32.5-36.5 mol% of the sebacic acid residue.

3. The aliphatic polyester according to claim 1 or 2, wherein a number-average molecular weight of the aliphatic polyester is 30,000-150,000, preferably 45,000-120,000, and more preferably 58,000-79,000.

4. The aliphatic polyester according to any one of claims 1-3, wherein according to GB/T 32366-2015, a carboxyl content of the aliphatic polyester is < 35 mol/t, preferably < 28 mol/t, and more preferably 5-20 mol/t.

5. The aliphatic polyester according to any one of claims 1-4, wherein according to GB/T 17931-1999, an intrinsic viscosity of the aliphatic polyester is 1.38-2.32 dL/g, preferably 1.5-2.2 dL/g.

6. A polyester composition, comprising a polymer A and a polymer B, wherein the polymer A comprises the aliphatic polyester according to any one of claims 1-5.

7. The polyester composition according to claim 6, wherein the polymer A further comprises a second polyester;
preferably, the second polyester comprises at least one of polylactic acid, an aliphatic-aromatic polyester, or other aliphatic polyesters;
preferably, the aliphatic-aromatic polyester comprises at least one of poly(butylene succinate-co-terephthalate), poly(butylene adipate-co-terephthalate), poly(butylene sebacate-co-terephthalate), or poly(butylene adipate-co-furandicarboxylate);
preferably, the other aliphatic polyesters comprise at least one of poly(butylene succinate), poly(butylene succinate-co-adipate), or poly(butylene sebacate);
preferably, the polymer B comprises at least one of starch, cellulose, chitin, chitosan, alginate, protein, gelatin, natural rubber, lignin, or derivatives of aforementioned substances; and
preferably, the polyester composition further comprises an auxiliary agent.

8. The polyester composition according to claim 6 or 7, comprising, in parts by weight, 50-95 parts of the aliphatic polyester, 1-20 parts of the second polyester, 1-30 parts of the polymer B, and 0-15 parts of the auxiliary agent.

9. A packaging film, comprising the aliphatic polyester according to any one of claims 1-5 or the polyester composition according to any one of claims 6-8.

10. The packaging film according to claim 9, wherein a degree of orientation of the packaging film is 0.7-1.6, further preferably 0.8-1.4, and more preferably 0.9-1.2.
